# EUROPEAN PATENT APPLICATION

(11) **EP 4 090 134 A1**
(43) Date of publication of application: **16.11.2022**
(21) Application number: 21173462.9
(22) Date of filing: 12.05.2021
(51) Int. Cl.: H05B 6/12

(54) **INDUCTION COIL DEVICE AND INDUCTION COOKING HOB HAVING AN INDUCTION COIL DEVICE**

(71) Applicant: ELECTROLUX APPLIANCES AKTIEBOLAG, 105 45 Stockholm (SE)
(72) Inventor: VIROLI, Alex, 47122 Forli (IT); NOSTRO, Massimo, 47100 Forli (IT); SCOTTO D'APOLLONIA, Adriano, 47122 Forli (IT); MILANESI, Filippo, 47122 Forli (IT); URGESE, Emanuel, 47122 Forli (IT); PAOLINI, Claudio, 47100 Forli (IT)
(74) Representative: Electrolux Group Patents

(57) **Abstract**

There is described an induction coil device (4) for an induction cooking hob (1) having a hob plate (2) and a support structure (3). The induction coil device (4) is designed to be interposed between the hob plate (2) and the support structure (3) and comprises at least one induction coil (10), a support frame (11) carrying the induction coil (10), a spring assembly (12) having one or more spring elements (13) configured to interact with the support structure (3) and the support frame (11) and to force the support frame (11) towards the hob plate (2); and a plurality of spacer elements (14) mounted to and protruding from the support frame (11) and designed to abut against the hob plate (2).

## Description

The present invention relates to an induction coil device for an induction cooking hob.

Advantageously, the present invention also relates to an induction cooking hob for the thermal treatment of food products having at least one induction coil device.

Induction cooking hobs are known for the cooking of food products by means of thermal conditioning of the food products.

A typical induction cooking hob comprises a hob plate being configured to support the cooking vessels carrying the food product to be cooked, a support structure spaced apart from the hob plate and one or more induction coil devices being arranged between the hob plate and the support structure.

A typical induction coil device comprises an induction coil and a support frame carrying the induction coil and which is screwed onto the support structure for fixing the position of the induction coil device.

Some inconveniences have been encountered with the screwing of the support frames on the support structure.

E.g. it has been found that the gap being present between the induction coils and the hob plate is not uniform between the different induction coils and often also when considering the gap between differing portions of the same induction coil. Furthermore, in order to mitigate the differences in the gap, one has to carefully choose the stiffness of the support structure.

Additionally, it has been observed that thermal variations of the support structure have an effect on the relative position of the induction coil devices with respect to the hob plate.

Thus, a need is felt in the sector to improve the known induction cooking hobs and/or the known induction coil devices so as to improve at least one of the above-mentioned inconveniences.

One aim of the present invention is to provide for a induction coil device, to overcome, in a straightforward manner, at least one of the aforementioned inconveniences.

Another aim of the present invention is to provide for an induction cooking hob, to overcome, in a straightforward manner, at least one of the aforementioned inconveniences.

According to the present invention, there is provided an induction coil device and an induction cooking hob according to the respective independent claims.

Preferred non-limiting embodiments of the induction coil device and the induction cooking hob are claimed in the respective dependent claims.

In addition, according to the present invention, there is provided an induction coil device for an induction cooking hob having a hob plate and a support structure. The induction coil device is designed to be interposed between the hob plate and the support structure and comprises at least:
- one induction coil;
- a support frame carrying the induction coil;
- a spring assembly having one or more spring elements configured to interact with the support structure and the support frame and to force the support frame towards the hob plate; and
- a plurality of spacer elements mounted to and protruding from the support frame and designed to abut against the hob plate.

By providing for the spring assembly and the spacer elements, it is possible to precisely align each induction coil device with respect to the hob plate. In particular, one achieves that the gap between the induction coils and the hob plate is uniform.

Additionally, any thermal deformations of the support structure are compensate by the spring assembly, in particular the spring elements.

Furthermore, one also avoids the need to carefully choose the stiffness of the support structure.

According to some possible embodiments, the support frame comprises a plurality of housing seats, each one carrying one respective spacer element.

In this manner, the position of the spacer elements are precisely defined.

According to some possible embodiments, the housing seats are peripherally arranged.

In this manner, one ensures an even more precise alignment of the induction coil device.

According to some possible embodiments, the spacer elements are bond onto the support frame and/or mechanically fixed and/or force fitted.

In this way, one ensures that the spacer elements may not detach from the support frame and/or may not change position.

Alternatively or additionally, the spacer elements may be removably fixed on the support frame.

This ensures that if necessary, the spacer elements can be exchanged.

According to some possible embodiments, the support frame comprises one or more through-hole portions, each one carrying one respective through-hole configured to receive at least a portion of a respective pillar of the support structure. Each spring element is configured to be fitted onto one respective pillar and to abut against the through-hole portion and the support structure for forcing the support frame towards the hob plate.

In this manner, one precisely defines the direction of the force and one also ensures a precise alignment of the coil induction device with respect to the hob plate.

According to some possible non-limiting embodiments, each support frame comprises an aluminum shield plate. In particular, each aluminum shield plate may face the support base.

By providing for the aluminum shield plate it is possible to shield the electromagnetic radiation generated by the induction coils.

According to some possible non-limiting embodiments, each induction coil device may also comprise a thermal insulation layer, in particular being coupled to the respective support frame.

Preferentially but not necessarily, each thermal insulation layer may be interposed between the hob plate and the respective support frame.

By providing for the thermal insulation layer it is possible to improve heat insulation.

In addition, according to the present invention, there is provided an induction cooking hob for the thermal treatment of food products comprising at least:
- a hob panel;
- a support structure spaced apart from the hob panel; and
- one or more induction coil devices interposed between the hob panel and the support structure.

Each induction coil device comprises at least:
- one induction coil;
- a support frame carrying the induction coil;
- a spring assembly having one or more spring elements interacting with the support structure and the support frame and forcing the support frame towards the hob plate; and
- a plurality of spacer elements mounted to and protruding from the support frame and designed to abut against the hob plate.

By providing for the spring assembly and the spacer elements, it is possible to precisely align each induction coil device with respect to the hob plate. In particular, one achieves that the gap between the induction coils and the hob plate is uniform.

Additionally, any thermal deformations of the support structure are compensated by the spring assembly, in particular the spring elements.

Furthermore, one also avoids the need to carefully choose the stiffness of the support structure.

According to some possible non-limiting embodiments, the spring assembly is configured to exert a force on the support frame into a force direction towards the hob plate.

According to some possible non-limiting embodiments, the force direction is normal to the support frame and/or the support structure and/or the hob plate.

In this way, one ensures the correct alignment of the induction coil devices with respect to the hob plate.

According to some possible non-limiting embodiments, the support frame comprises a plurality of housing seats, each one carrying one respective spacer element.

In this manner, the position of the spacer elements are precisely defined.

According to some possible embodiments, the housing seats are peripherally disposed.

In this manner, one ensures an even more precise alignment of the induction coil device.

According to some possible embodiments, the spacer elements are bond onto the support frame and/or mechanically fixed and/or force fitted.

In this way, one ensures that the spacer elements may not detach from the support frame and/or may not change position.

Alternatively or additionally, the spacer elements are removably fixed on the support frame.

This ensures that if necessary, the spacer elements can be exchanged.

According to some possible non-limiting embodiments, the support structure comprises a plurality of pillars and the support frame comprises a plurality of through-hole portions, each one carrying one respective through-hole. One respective pillar extends through one respective through-hole. Furthermore, each spring element is fitted onto one respective pillar and abuts against the support structure and the through-hole portion for forcing the support frame towards the hob plate.

In this way, each support frame is coupled to the respective pillars and the spring assembly can precisely act on the support frame for precisely aligning the support frame with respect to the hob plate.

Preferentially but not necessarily, each through-hole portion is slidingly engaged with the respective pillar.

This allows to compensate for local differences, e.g. due to thermal deformation or other differences, and guarantees the correct alignment of the respective induction coil device.

Preferentially but not necessarily, each pillar erects from a base of the support frame and is interposed between the support surface and the respective through-hole portion.

Preferentially but not necessarily, each pillar is integral to the base.

This allows a simple construction of the support structure.

One non-limiting embodiment of the present invention will now be described, by way of example, with reference to the accompanying drawings, in which:
- Figure 1 is a schematic perspective view of an induction cooking hob according to the present invention, with parts removed for clarity;
- Figure 2 is an exploded view of an induction coil device according to the present invention of the induction cooking hob of Figure 1, with parts removed for clarity; and
- Figure 3 is a an enlarged perspective view of a detail of the induction cooking hob of Figure 1, with parts removed for clarity;
- Figure 4 is an exploded view of the detail of Figure 3, with parts removed for clarity;
- Figure 5 is an enlarged perspective view of another detail of the induction coil device of Figure 2, with parts removed for clarity; and
- Figure 6 is schematic section view of the induction coil device of Figure 2, with parts removed for clarity.

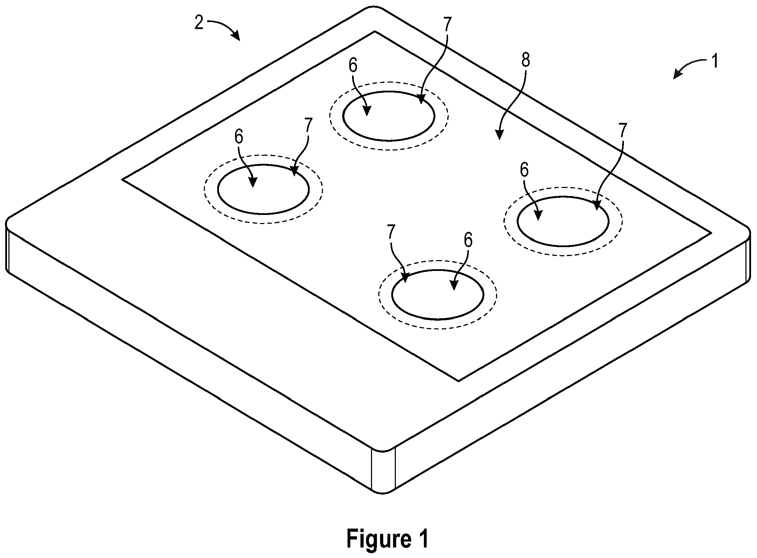

With particular reference to Figure 1, number 1 indicates as a whole an induction cooking hob 1 for the thermal treatment, in particular for the heating, of a food product.

According to some possible non-limiting embodiments, the food product to be thermally treated may be a single ingredient or a mixture of ingredients. It should also be noted that the food product to be treated may vary throughout the overall thermal treatment process; i.e. it may be possible to add or remove ingredients to the food product during the thermal treatment.

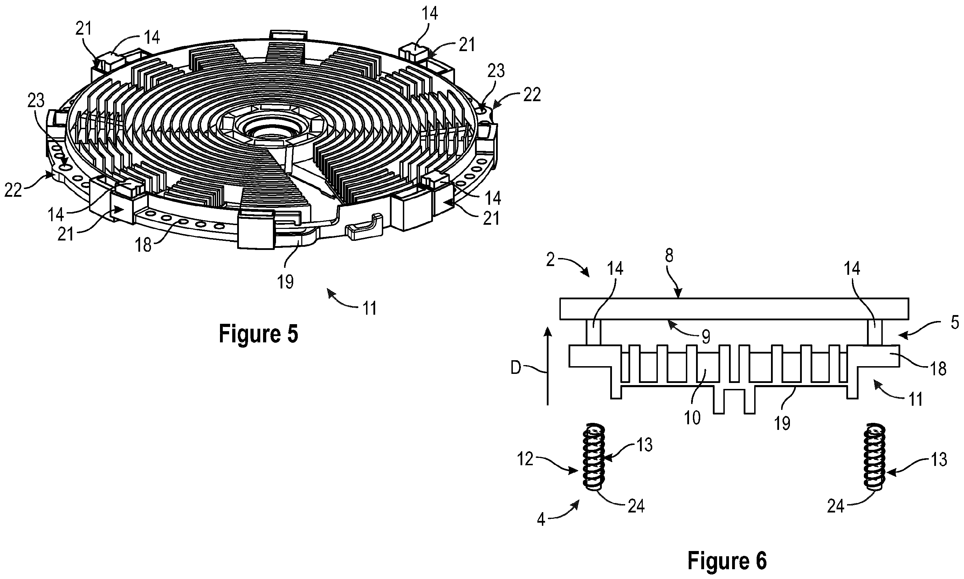

With particular reference to Figures 1 to 6, induction cooking hob 1 comprises at least:
- a hob panel 2;
- a (plastic) support structure 3 spaced apart from hob panel 2; and
- one or more induction coil devices 4 interposed between hob panel 2 and support structure 3.

In particular, hob plate 2 and support structure 3 may define an interspace 5 and induction coil devices 4 are arranged within interspace 5.

Moreover, induction coil devices 4 may be spaced apart from one another, in particular within interspace 5.

Preferentially, hob plate 2 may have a (substantially) horizontal orientation.

Furthermore, hob plate 2 may be configured to support loads, in particular cooking vessels, even more particular cooking vessels being filled with the food product.

In particular, each cooking vessel is adapted to be heated by means of induction heating. Even more particular, each cooking vessel comprises (,in particular substantially consists of) a magnetic and/or ferromagnetic material.

According to some possible non-limiting embodiments, each cooking vessel can be of any type and form. A non-exhaustive list of cooking vessels are pans, pots and kettles.

Furthermore and with particular reference to Figure 1, induction cooking hob 1 may comprise one or more cooking zones 6, each one comprising at least one induction coil device 4 and a respective support portion 7 of hob plate 2. In the example shown, induction cooking hob 1 comprises four cooking zones 6. It can be understood that the number of cooking zones 6 can vary from four. Additionally, one notes that cooking zones 6 according to Figure 1 are fixed. Alternatively, induction cooking hob 1 could be designed such that cooking zones 6 may be dynamic, e.g. in function of the size and/or position of the cooking vessel.

More specifically, hob plate 2 may comprise (in particular, consist of) a dielectric material, in particular a glass-ceramic material.

Additionally, hob plate 2 may comprise a first face 8 configured to receive the cooking vessels and a second face 9 opposed to first face 8 and facing support structure 3.

In particular, second face 9 may also face induction coil devices 4.

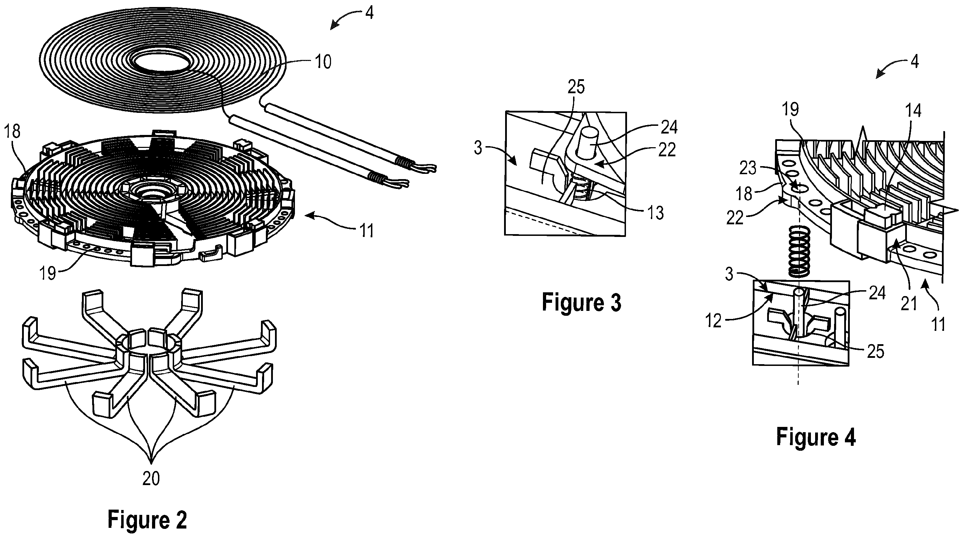

In more detail and with particular reference to Figures 2 to 6, each induction coil device 4 comprises at least:
- one induction coil 10 configured to generate a (time-varying) electromagnetic field;
- a support frame 11 carrying induction coil 10; and
- a spring assembly 12 having one or more (metal) spring elements 13 configured to interact and/or interacting with support structure 3 and support frame 11 and configured to force and/or forcing support frame 11 towards hob plate 2; and
- a plurality of spacer elements 14 connected to and protruding from support frame 11 and designed to abut and/or abutting against hob plate 2, in particular second face 9.

In more detail, each spring assembly 12 is, in particular the respective spring elements 13 are, configured to exert a force on the respective support frame 11 into a force direction D towards hob plate 2. In particular, the direction is normal to the respective support frame 11 and/or support structure 3 and/or hob plate 2.

Moreover, each spring element 13 may interact with a peripheral portion 18 of the respective support frame 11.

In particular, the exertion of the force by means of each spring assembly 12 on the respective support frame 11 results in the respective spacer elements 14 abutting against hob plate 2, in particular second face 9.

In more detail, each support frame 11 may comprise a plastic base 19 carrying the respective induction coil 10, and in particular also one or more ferrites 20 connected to plastic base 19.

Additionally, each support frame 11, in particular the respective plastic base 19, may comprise a plurality of housing seats 21, each one carrying one respective spacer element 14. In particular, housing seats 21 may be peripherally arranged.

According to some possible non-limiting embodiments, spacer elements 14 may be bond onto the respective support frame 11, in particular the respective plastic base 19.

Additionally or in addition, spacer elements 14 may be mechanically fixed on and/or force fitted and/or removably fixed on the respective support frame 11, in particular the respective plastic base 19, even more particular in the respective housing seat 21.

Preferentially, the spacer elements 14 of each induction coil device 4 may be configured to define a (controlled) gap between hob plate 2, in particular second face 9, and the respective support frame 11, in particular the respective plastic base 19.

More specifically, each spacer element 14 may comprise a respective abutment surface designed to abut and/or abutting against second face 9. Moreover, the respective abutment surfaces of spacer elements 14 of each induction coil device 4 lie within a common plane. Furthermore, each common plane is parallel to hob plate 2, in particular second face 9.

In particular, the respective common plane of each induction coil device 4 (substantially) coincides with second face 9.

According to some possible non-limiting embodiments, each spacer element 14 of one respective induction coil device 4 is identical to the other ones of the respective induction coil device 4. Preferentially but not necessarily, all spacer elements 14 are identical to one another.

With particular reference to Figures 3 to 5, each support frame 11, in particular the respective plastic base 19, may comprise a plurality of through-hole portions 22, each having at least one respective through-hole 23.

More specifically, each through-hole portion 22 defines a relative section of the respective peripheral portion 18.

Furthermore, support structure 3 may comprise a plurality of (plastic) pillars 24, in particular extending towards hob plate 2. In particular, each pillar 24 is perpendicular to hob plate 2 and/or the respective induction coil device 4.

Moreover, each pillar 24 may (perpendicularly) erect from a base 25 of support structure 3. In particular, pillar 24 is integral to base 25.

Additionally, each pillar 24 is designed to (at least partially) extend and/or extends through one respective through-hole 23.

Preferentially, each pillar 24 may be interposed between support structure 3 and the respective through-hole portion 22.

Moreover, each spring element 13 may be configured to be fitted and/or may be fitted onto one respective pillar 24 so as to interact with the respective support frame 11 and support structure 3. In particular, each spring element 13 is configured to abut and/or abuts against support structure 3 and the respective through-hole portion 22.

Moreover, each spring element 13 may be coaxial to the respective pillar 24.

Furthermore, each through-hole portion 22 may be slidingly engaged with the respective pillar 24. In particular, this allows a local (linear) movement of the respective through-hole portion 22 and thereby a control of the orientation and/or alignment of the respective support frame 11.

According to some non-limiting embodiments not shown, each support frame 11 may also comprise an aluminum shield plate.

Each aluminum shield plate may be arranged such that the respective ferrites 20 may be sandwiched between the aluminum shield plate and plastic base 19.

In particular, each aluminum shield plate may support the respective ferrites 20 and/or the respective plastic base 19.

Furthermore, each aluminum shield may face support structure 3.

Additionally, each aluminum shield plate may comprise a plurality of through-holes, through which one respective pillar 24 may extend. In particular, each through-hole of each aluminum shield plate may be aligned with respect to one respective through-hole 23.

Moreover, each spring element 13 may be configured to interact with the respective aluminum shield plate and support structure 3. In particular, each spring element 13 may be configured to abut and/or abuts against support structure 3 and the respective aluminum shield plate.

According to some embodiments not shown, each induction coil device 4 may also comprise a thermal insulation layer, in particular being coupled to support frame 11.

In more detail, each thermal insulation layer may be interposed between hob plate 2 and the respective support frame 11 and/or the respective induction coil 10.

Furthermore, each spacer element 14 may comprise a clamp portion configured to clamp thermal insulation layer between the respective clamp portions and the respective support frame 11.

More specifically, each clamp portion may be interposed between hob plate 2 and the respective thermal insulation layer. In particular, each clamp portion is in contact with hob plate 2, in particular second face 9 and the respective thermal insulation layer.

According to the present invention, the realization of induction cooking hob 1 comprises the steps of:
- providing hob plate 2;
- providing support structure 3; and
- interposing one or more induction coil devices 4 between hob plate 2 and support structure 3.

Furthermore, during the step of interposing, each support frame 11 is coupled to support structure 3 by means of the respective spring assembly 12 and to hob plate 2 by means of the respective spacer elements 14. In particular, spring assembly 12, in particular spring elements 13, force the respective support frame 11 towards hob plate 2 and the respective spacer elements 14 abut against hob plate 2, in particular second face 9.

In more detail, during the step of interposing, each spring element 13 is fitted onto one respective pillar 24 and the respective through-hole portion 22 is coupled to the respective pillar 24 so that the respective pillar 24 extends through the respective through-hole 23. In particular, the respective spring element 13 is arranged such that it abuts against support structure 3 and the respective through-hole portion 22.

Clearly, changes may be made to induction cooking hob 1 and/or induction coil device 4 without, however, departing from the scope of the present invention.

### List of Reference Signs

- 1: Induction cooking appliance
- 2: Hob plate
- 3: Support structure
- 4: Induction coil device
- 5: Interspace
- 6: Cooking zone
- 7: Support portion
- 8: First face
- 9: Second face
- 10: Induction coil
- 11: Support frame
- 12: Spring assembly
- 13: Spring element
- 14: Spacer element
- 18: Peripheral portion
- 19: Plastic base
- 20: Ferrite
- 21: Housing seat
- 22: Through-hole portion
- 23: Through-hole
- 24: Pillar
- 25: Base
- D: force direction

## Claims

1. Induction coil device (4) for an induction cooking hob (1) having a hob plate (2) and a support structure (3) ;
the induction coil device (4) is designed to be interposed between the hob plate (2) and the support structure (3) and comprises at least:
- one induction coil (10);
- a support frame (11) carrying the induction coil (10);
- a spring assembly (12) having one or more spring elements (13) configured to interact with the support structure (3) and the support frame (11) and to force the support frame (11) towards the hob plate (2); and
- a plurality of spacer elements (14) mounted to and protruding from the support frame (11) and designed to abut against the hob plate (2).

2. Induction coil device according to claim 1, wherein the support frame (11) comprises a plurality of housing seats (21), each one carrying one respective spacer element (14).

3. Induction coil device according to claim 2, wherein the housing seats (21) are peripherally arranged.

4. Induction coil device according to any one of the preceding claims, wherein the spacer elements (14) are bond onto the support frame (11) and/or mechanically fixed and/or force fitted and/or removably fixed on the support frame (11).

5. Induction coil device according to any one of the preceding claims, wherein the support frame (11) comprises one or more through-hole portions (22), each one carrying one respective through-hole (23) configured to receive at least a portion of a respective pillar (24) of the support structure (3);
wherein each spring element (13) is configured to be fitted onto one respective pillar (24) and to abut against the respective through-hole portion (22) and the support structure (3) for exerting the force onto the support frame (11).

6. Induction cooking hob for the thermal treatment of food products comprising at least:
- a hob panel (2);
- a support structure (3) spaced apart from the hob panel (2); and
- one or more induction coil devices (4) interposed between the hob panel (2) and the support structure (3);
wherein each induction coil device (4) comprises at least:
- one induction coil (10);
- a support frame (11) carrying the induction coil (10);
- a spring assembly (12) having one or more spring elements (13) interacting with the support structure (3) and the support frame (11) and forcing the support frame (11) towards the hob plate (2); and
- a plurality of spacer elements (14) mounted to and protruding from the support frame (11) and designed to abut against the hob plate (2).

7. Induction cooking hob according to claim 6, wherein each spring assembly (12) is configured to exert a force on the support frame (11) into a force direction (D) towards the hob plate (2).

8. Induction cooking hob according to claim 7, wherein the force direction (D) is normal to the support frame (11) and/or the support structure (3) and/or the hob plate (2).

9. Induction cooking hob according to any one of claims 6 to 8, wherein each support frame (11) comprises a plurality of housing seats (21), each one carrying one respective spacer element (14).

10. Induction cooking hob according to claims 9, wherein the housing seats (21) are peripherally disposed.

11. Induction cooking hob according to any one of claims 6 to 10, wherein the spacer elements (14) are bond onto the support frame (11) and/or mechanically fixed and/or force fitted and/or removably fixed on the support frame (11) .

12. Induction cooking hob according to any one of claims 6 to 11, wherein the support structure (3) comprises a plurality of pillars (24) and the support frame (11) comprises a plurality of through-hole portions (22), each one carrying at least one respective through-hole (23); wherein one respective pillar (24) extends through one respective through-hole (23);
wherein each spring element (13) is fitted onto one respective pillar (24) and abuts against the support structure (3) and the through-hole portion (22) for forcing the support frame (11) towards the hob plate (2).

13. Induction cooking hob according to claim 12, wherein each through-hole portion (22) is slidingly engaged with the respective pillar (24).

14. Induction cooking hob according to claim 12 or 13, wherein each pillar (24) erects from a base (25) of the support frame (11) and is interposed between the support surface (3) and the respective through-hole portion (22).

15. Induction cooking hob according to claim 14, wherein each pillar (24) is integral to the base (25).
